Europäisches Patentamt

European Patent Office

Office européen des brevets

(19)

(11) Veröffentlichungsnummer: **0 008 609**
B1

(12) **EUROPÄISCHE PATENTSCHRIFT**

(45) Veröffentlichungstag der Patentschrift:
04.11.81

(51) Int. Cl.³: **G 05 D 23/10, H 01 H 37/60**

(21) Anmeldenummer: **79101783.3**

(22) Anmeldetag: **06.06.79**

(54) **Thermostatischer Grob-Fein-Regler.**

(30) Priorität: **05.09.78 DE 2838703**

(43) Veröffentlichungstag der Anmeldung:
**19.03.80 Patentblatt 80/6**

(45) Bekanntmachung des Hinweises auf die Patenterteilung:
**04.11.81 Patentblatt 81/44**

(84) Benannte Vertragsstaaten:
**CH FR GB IT**

(56) Entgegenhaltungen:
**DE-C-1 119 028**
**DE-U-7 122 761**

(73) Patentinhaber: **EMERSON ELECTRIC GMBH,
Heerstrasse 111, D-7050 Waiblingen (DE)**

(72) Erfinder: **Grüninger, Fritz, Sachsenweg 26,
D-7050 Waiblingen (DE)**

(74) Vertreter: **Patentanwälte Dipl.-Ing. W. Scherrmann
Dr.-Ing. R. Rüger, Webergasse 3, D-7300 Esslingen (DE)**

## Thermostatischer Grob-Fein-Regler

Die Erfindung betrifft einen thermostatischen Grob-Fein-Regler, insbesondere für Waschmaschinen, mit einem Reglergehäuse und einem durch einen Kapillarfühler gesteuerten, einseitig abgestützten Wärmeausdehnungsglied mit zugeordneter Einstelleinrichtung, durch das mehrere, unabhängig auf einen Schaltpunkt einjustierbare Schnappschalter mittels eines gemeinsamen Betätigungsorgans ansteuerbar sind.

Aus der DE-A-1 119 028 ist ein thermostatischer Regler mit unabhängig voneinander justierbaren Schnappschaltern bekannt, die über einen gemeinsamen Übertragungshebel geschaltet werden. Dieser Übertragungshebel ist als zweiarmiger Hebel ausgebildet, der auf einer Seite eine Justierschraube, mit der er an einem flüssigkeitsgefüllten Wärmeausdehnungsgefäß anliegt, und auf der anderen Hebelseite für jeden Schnappschalter eine weitere Justierschraube aufweist. Zusätzlich besteht die Möglichkeit, durch eine Einstellspindel, die auf der dem Hebel gegenüberliegenden Seite des Wärmeausdehnungsgefäßes angeordnet ist, das Wärmeausdehnungsgefäß auf den Hebel zu oder von diesem weg zu bewegen, womit die Schalttemperatur für alle Schnappschalter gemeinsam verändert wird.

Dieser thermostatische Regler gestattet es nicht, den Schaltpunkt eines einzelnen Schnappschalters wahlfrei einzustellen, derart, daß der Regler mehrere justierte aber fest eingestellte und eine wahlfreie einstellbare Schalttemperatur aufweist, wie sie beispielsweise für Waschmaschinensteuerungen notwendig ist, weil die Justierschrauben sich wegen ihrer Befestigung in dem Übertragungshebel mit diesem beim Schaltvorgang mitbewegen. Die bei diesem Regler vorhandene wahlfreie Einstellmöglichkeit wirkt nur in der Art einer übergeordneten Einstellung auf alle Schnappschalter gemeinsam.

Aufgabe der Erfindung ist es, einen thermostatischen Grob-Fein-Regler zu schaffen, bei dem mehrere Schnappschalter von einem Wärmeausdehnungsglied gesteuert sind, wobei aber der temperaturabhängige Schaltpunkt eines Schnappschalters innerhalb eines vorbestimmten Bereiches wahlfrei einstellbar ist und mindestens ein weiterer Schnappschalter mit justierbar temperaturabhängigem Schaltpunkt vorhanden ist und die Stellmöglichkeiten der Schnappschalter voneinander unabhängig sind.

Zur Lösung dieser Aufgabe ist der eingangs genannte thermostatische Regler erfindungsgemäß dadurch gekennzeichnet, daß einer der von dem gemeinsamen Betätigungsorgan schaltbaren Schnappschalter mit einer nach Einbau des Reglers in ein elektrisches Gerät von außen betätigbaren Vorrichtung zur wahlfreien und rückwirkungsfreien Feineinstellung des Schaltpunktes innerhalb eines vorbestimmten Bereiches versehen ist.

Der Vorteil des neuen thermostatischen Reglers besteht darin, daß mit Hilfe eines temperaturempfindlichen Fühlers, beispielsweise in Waschmaschinen, Waschprogramme ausgeführt werden können, bei denen es darauf ankommt, daß ein oder mehrere Waschvorgänge mit fest vorgegebener Temperatur abgewickelt werden und andere Waschvorgänge mit individuell einstellbarer Waschlaugentemperatur. Durch die Verwendung eines Kapillarfühlers als temperaturempfindliches Glied wird eine große Genauigkeit der einzuhaltenden Temperatur erreicht, die die Genauigkeit beispielsweise von Bimetallschaltern übertrifft. Da außerdem alle zur Regelung der Temperatur benötigten Schalter von ein und demselben Wärmeausdehnungsglied beaufschlagt werden, ist die Installation von nur einem Kapillarfühler notwendig, wodurch die Herstellungskosten des Endgerätes spürbar gesenkt werden und wegen der Verringerung der Bauelemente auch eine Verbesserung der Geräteverfügbarkeit erreicht wird.

Sehr einfache konstruktive Verhältnisse innerhalb des Reglergehäuses ergeben sich, wenn das Schwenklager jeder Schnappschalterwippe in dem Reglergehäuse verschiebbar und in der jeweiligen Lage feststellbar ist.

Die Justierung der fest eingestellten Schalterkontakte ist erleichtert, wenn die Schwenklager mit Hilfe einer durch das Reglergehäuse hindurchreichenden Schraube gegen eine Federkraft verschoben werden können.

Für den wahlfrei einstellbaren Schalterkontakt kann das gleiche Schwenklager wie bei den justierbaren Schnappschaltern vorgesehen werden, bei dem jedoch die Verschiebung des Schwenklagers innerhalb des Reglergehäuses mit Hilfe eines Druckstückes, eines Kupplungselementes zur translatorischen Kraftübertragung auf das Druckstück und einer Einstellwelle erfolgt, die in ihrem Drehwinkel begrenzt ist und eine solche Länge aufweist, daß auf ihr direkt ein Drehknopf drehfest befestigt werden kann. Es kann hierbei vorteilhaft sein, wenn das Druckstück eine blockähnliche Gestalt hat.

Wenn das Druckstück aus Keramikmasse oder anderem elektrisch nicht leitendem Material gefertigt ist, so ergeben sich besonders sichere elektrische Verhältnisse.

Das Schwenklager kann in einer zweckmäßigen Ausführungsform in der Form eines Winkelprofils ausgeführt sein, dessen einer Schenkel in der Justage bzw. Einstellvorrichtung befestigt ist und dessen anderer Schenkel in dem Reglergehäuse seitlich geführt ist und einen randoffenen Schlitz aufweist, durch den die T-förmig ausgebildete Schaltwippe hindurchreicht, deren Lagerschneiden in entsprechenden Kerben, die in Richtung des Winkelfalzes verlaufen, aufliegen.

Um den Einbau des erfindungsgemäßen Reglers zu vereinfachen, können bereits bei der Herstellung des Reglers vorbestimmte Schaltkontakte elektrisch miteinander verbunden sein, um somit zusätzliche Verdrahtungsarbeiten einzusparen.

In der Zeichnung ist ein Ausführungsbeispiel des Gegenstandes der Erfindung dargestellt. Es zeigt

Figur 1 einen Regler gemäß der Erfindung mit abgenommenem Gehäuseoberteil, in einer Draufsicht,

Figur 2 den Regler nach Figur 1, geschnitten entlang der Linie II-II der Figur 1, in einer Seitenansicht,

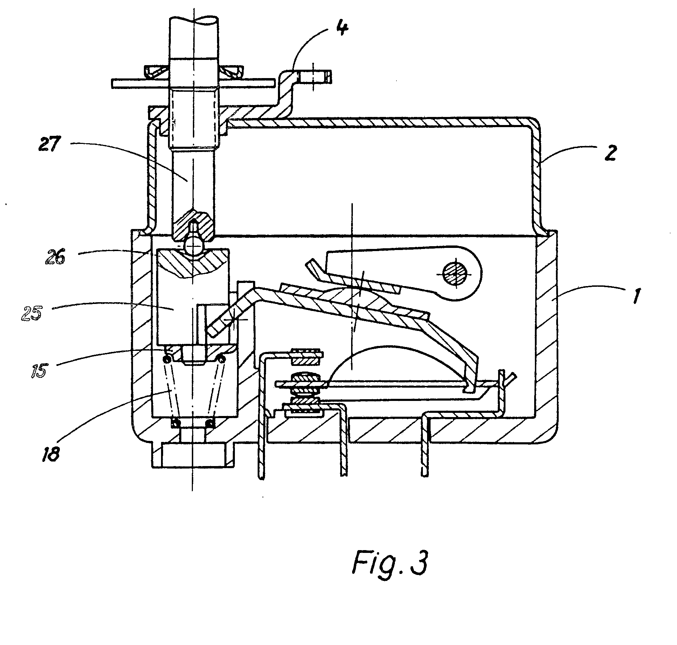

Figur 3 den Regler nach Figur 1, geschnitten entlang der Linie III-III der Figur 1, in einer Seitenansicht und

Figur 4 den geschlossenen Regler nach Figur 1, in einer Draufsicht.

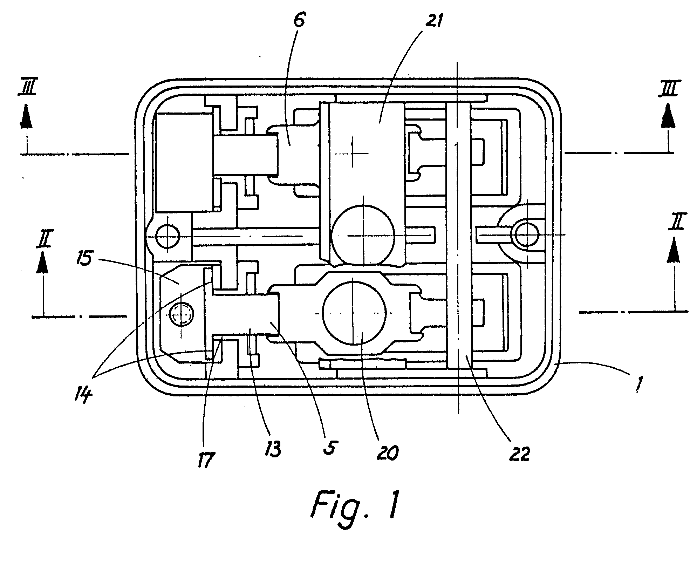

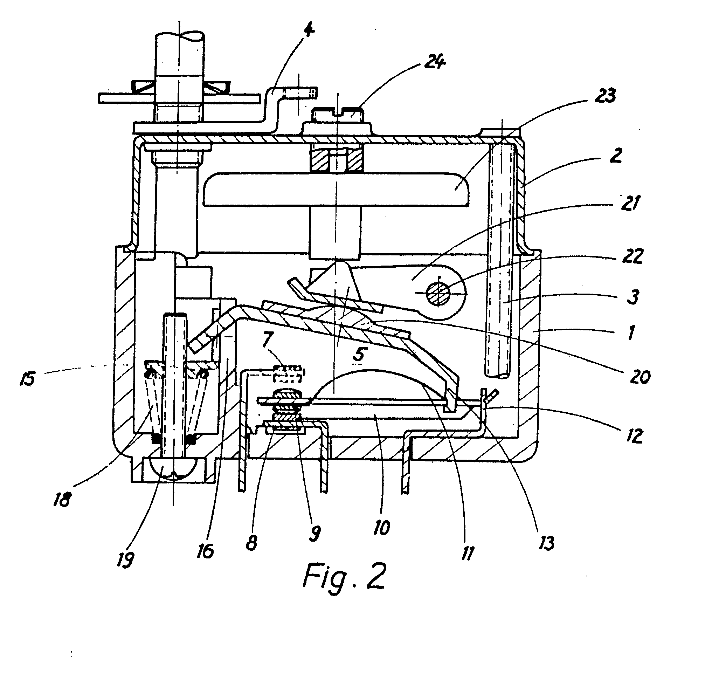

Der in Figur 2 dargestellte thermostatische Regler weist ein zweiteiliges Reglergehäuse auf, dessen Gehäuseunterteil 1 aus elektrisch nicht leitendem Material und dessen Gehäuseoberteil 2 aus Metall bestehen. Die beiden Gehäuseteile sind von zwei Schrauben 3, von denen in Figur 2 wegen der gewählten Darstellung nur eine sichtbar ist, zusammengehalten. An dem Gehäuseoberteil ist eine Befestigungseinrichtung, beispielsweise ein Blechflansch 4, zur Montage des thermostatischen Reglers in einem Gerät vorgesehen. Wie in Figur 1 ersichtlich, sind in dem Gehäuseunterteil 1 zwei Schnappschalter, ein justierbarer 5 und ein wahlfrei einstellbarer 6 nebeneinander angeordnet.

Da sich der Aufbau des justierbaren Schnappschalters 5 und des einstellbaren Schnappschalters 6 weitgehend gleichen, wird der Aufbau anhand des justierbaren Schnappschalters, der in Figur 2 in einer Seitenansicht dargestellt ist, erläutert:

In dem Gehäuseunterteil 1 sind zwei feststehende Schalterkontakte 7 und 8 mit jeweils zugehörigen Kontaktfahnen befestigt. Zwischen diesen beiden feststehenden Kontakten 7 und 8 befindet sich ein beweglicher Schalterkontakt 9, der auf einem rahmenartigen Kontaktträger 10 befestigt ist. Mittels einer an dem Kontaktträger 10 befestigten Schnappfeder 11 ist der Kontaktträger 10 in ein zugehöriges Widerlager 12 gedrückt, über das gleichzeitig die Stromzuführung zu dem beweglichen Schalterkontakt 9 erfolgt. Die Schnappfeder 11 wölbt sich nach oben durch die Ausnehmung des rahmenartigen Kontaktträgers 10 und stützt sich mit ihrem freien Ende in einer Kerbe einer bogenförmig ausgebildeten Schaltwippe 13 ab. Auf der dem Auflagepunkt der Schnappfeder 11 gegenüberliegenden Seite ist die Schaltwippe 13 T-förmig ausgebildet, wie in Figur 1 ersichtlich, und weist dort zwei Lagerschneiden 14 auf, die in einem zugehörigen Schwenklager 15 aufliegen. Das Schwenklager 15 liegt, um die Federkraft der Schnappfeder 11 aufnehmen zu können, an einer Zwischenwand 16 des Gehäuseunterteils 1 an. Zur Aufnahme der Schaltwippe 13 weisen das Schwenklager 15 und die Gehäusezwischenwand 16 jeweils einseitig offene, fluchtende Schlitze auf, durch die die Schaltwippe 13 hindurchragt, so daß die Lagerschneiden 14 in dem Schwenklager 15 aufliegen. Das Schwenklager 15 besteht aus einem Winkelprofil, dessen einer Schenkel den Schlitz 17 aufweist und die Lagerschneiden 14 der Schaltwippe 13 trägt und dessen anderer Schenkel durch eine Feder 18 gegen den Boden des Gehäuseunterteils 1 abgestützt ist. Durch den Boden des Gehäuseunterteils 1 und die Feder 19 ragt eine zur Justage des Umschaltpunktes dienende Justierschraube 19, die in ein entsprechendes Gewinde des Schwenklagers 15 eingedreht ist. Damit das Schwenklager 15 beim Betätigen des Schnappschalters 5 in dem Gehäuseunterteil 1 nicht ungewollt verschoben wird, muß die Kraft, mit der die Feder 18 das Schwenklager 15 gegen den Boden des Gehäuseunterteils 1 abstützt, größer sein als die senkrechte Kraftkomponente, die durch die Schalterbetätigung in dem Schwenklager 15 auftritt. An der Schaltwippe 13 ist etwa in der Mitte ein Höcker 20 aus elektrisch nicht leitendem Material angeformt, der durch eine mittels einer Achse 22 in dem Gehäuseunterteil 1 gelagerten Zwischenwippe 21 beaufschlagt ist. Die Zwischenwippe 21 erstreckt sich über die nebeneinander angeordneten Schnappschalter 5, 6, wie in Figur 1 ersichtlich. Die Zwischenwippe 21 wird ihrerseits durch ein Wärmeausdehnungsglied 23 betätigt, das einends mit einem Zapfen in einer entsprechenden Bohrung einer zugehörigen Justageschraube 24 (Figur 2) abgestützt und geführt ist. Die Justageschraube 24 ist in ein Gewinde in dem Gehäuseoberteil 2 eingeschraubt. An das Wärmeausdehnungsglied 23 ist ein nicht dargestellter Kapillarfühler angeschlossen.

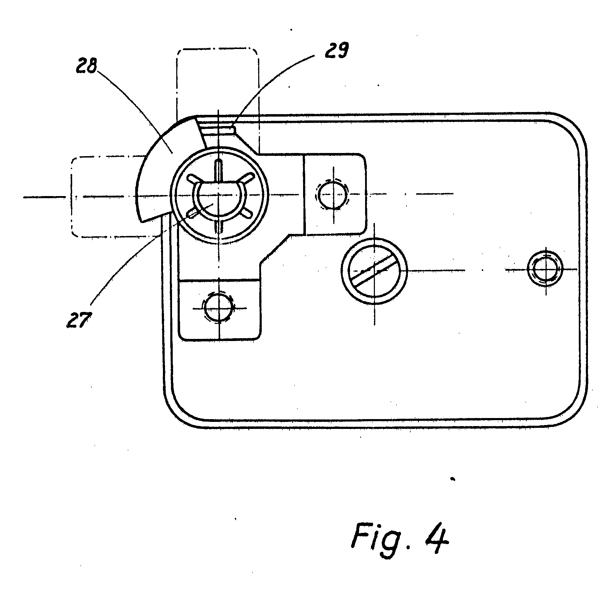

Im Unterschied zu dem Schwenklager 15 des justierbaren Schnappschalters 5, bei dem die Federkraft der Stützfeder 18 von der Justageschraube 19 aufgenommen ist, ist das Schwenklager 15 des wahlfrei einstellbaren Schnappschalters 6 zwischen der Stützfeder 18 und einem blockartigen Druckstück 25 eingespannt. Das Druckstück 25 besteht aus elektrisch nicht leitendem Material, beispielsweise Keramikmasse, und wird in dem Gehäuseunterteil 1 so längsverschiebbar geführt, daß es nur eine translatorische Kraft auf das Schwenklager 15 übertragen kann. Durch ein Kupplungselement in Form einer Kugel 26 wird das Druckstück 25 von einer in einem Gewinde in dem Gehäuseoberteil 2 geführten Einstellwelle 27 beaufschlagt. Der Drehwinkel der Einstellwelle 27 und damit der Einstellbereich des Schwenklagers 15 sind von einer Sektorscheibe 28 zusammen mit einem entsprechenden Anschlag 29 nach Figur 4 festgelegt.

Der insoweit in seinem Aufbau beschriebene thermostatische Regler arbeitet wie folgt:

Bei einer Temperaturerhöhung, die in dem das Kapillarelement umgebenden Medium auftritt, dehnt sich das Wärmeausdehnungsglied 23 aus und drückt die Zwischenwippe 21 und hierdurch die Schaltwippen 13 der Schnappschalter 5 und 6 nach unten. Wenn eine Verbindungsgerade, die durch den Auflagepunkt der Schnappfeder 11 in der Schalterwippe 13 und den Drehpunkt des Kontaktträgers 10 in dem zugehörigen Widerlager 12 führt, soweit verschwenkt ist, daß sie durch die Kontaktfläche, die der bewegliche Schalterkontakt 9 mit dem feststehenden Schalterkontakt 8 bildet, geht, springt der bewegliche Schalterkontakt 9 um und liegt nunmehr an dem oberen feststehenden Schalterkontakt 7 an. Die Temperatur, bei der das Umspringen des beweglichen Schalterkontaktes 9 erfolgt, ist zum einen von der jeweiligen Einstellung Justageschraube 24 abhängig und zum anderen von der des jedem der Schnappschalter 5, 6 zugeordneten Schwenklagers 15. Die höchste Umschalttemperatur wird erzielt, wenn das jeweilige Schwenklager 15 soweit wie möglich in Richtung auf den Boden des Gehäuseunterteils 1 verschoben ist. Umgekehrt wird die niedrigste Umschalttemperatur erreicht, wenn das jeweilige Schwenklager 15 seine obere Extremstellung einnimmt.

Der Schnappschalter 5 ist mittels der Justierschraube 19 auf eine feste unveränderliche Schalttemperatur eingestellt. Demgegenüber ist die Schalttemperatur des Schnappschalters 6 mittels der Einstellwelle 27 innerhalb des erläuterten Bereiches frei wählbar. Die Einstellung bzw. Wahl des Schaltpunktes bei den beiden Schnappschaltern 5, 6 ist dabei voneinander unabhängig, weil deren Schwenklager 15 unabhängig voneinander verstellbar sind. Die Justierschraube 24 wirkt als übergeordnete Stellmöglichkeit für alle Schnappschalter, da hierdurch die Grundeinstellung des Wärmeausdehnungsgliedes 23 veränderbar ist.

Beim Justieren des thermostatischen Reglers wird zunächst die Justierschraube 24 so lange verstellt, bis der Einstellbereich des wahlfrei einstellbaren Schnappschalters 6 in dem jeweiligen Sollbereich liegt; erst anschließend wird der justierbare Schnappschalter 5 mittels der Justierschraube 19 auf seine jeweilige Sollschalttemperatur einjustiert.

Bei diesem thermostatischen Regler können mehr als ein justierbarer Schnappschalter 5 in dem Gehäuseunterteil 2 angeordnet sein. Beispielsweise sind Ausführungsformen denkbar, bei denen zwei oder drei justierbare Schnappschalter 5 neben einem wahlfrei einstellbaren Schnappschalter 6 vorhanden sind. Die jeweils benötigte Anzahl von justierbaren Schnappschaltern 5 wird durch die Anforderungen an das Gerät festgelegt, in welches der thermostatische Regler eingebaut werden soll.

Zur Vereinfachung der Montage des thermostatischen Reglers können vorbestimmte Schalterkontakte 7, 8, 9 der einzelnen Schnappschalter 5, 6 bereits bei der Fertigung des thermostatischen Reglers durch entsprechende Ausbildung der kontakttragenden Bleche elektrisch miteinander verbunden sein, wodurch wegen des Fortfalls einer zusätzlichen Verdrahtung mögliche Fehlerquellen ausgeschaltet werden.

## Patentansprüche

1. Thermostatischer Grob-Fein-Regler, insbesondere für Waschmaschinen, mit einem Reglergehäuse (1) und einem durch einen Kapillarfühler gesteuerten, einseitig abgestützten Wärmeausdehnungsglied (23) mit zugeordneter Einstelleinrichtung (24), durch das (23) mehrere unabhängig voneinander auf einen Schaltpunkt einjustierbare Schnappschalter (5, 6) mittels eines gemeinsamen Betätigungsorgans (21) ansteuerbar sind, dadurch gekennzeichnet, daß einer der von dem gemeinsamen Betätigungsorgan (21) schaltbaren Schnappschalter (5, 6) mit einer nach Einbau des Reglers in ein elektrisches Gerät von außen betätigbaren Vorrichtung (25, 26, 27) zur wahlfreien und rückwirkungsfreien Feineinstellung des Schaltpunktes innerhalb eines vorbestimmten Bereiches versehen ist.

2. Regler nach Anspruch 1, dadurch gekennzeichnet, daß jeder der Schnappschalter (5, 6) eine einends schwenkbar gelagerte Schaltwippe (13) aufweist, deren Schwenklager (15) in Stellhubrichtung des Wärmeausdehnungsgliedes (23) und in Betätigungsrichtung des Schnappschalters (5, 6) verschiebbar und in ihrer jeweiligen Lage feststellbar sind.

3. Regler nach Anspruch 2, dadurch gekennzeichnet, daß das in einer Richtung federnd gegen das Reglergehäuse (1) abgestützte und im Reglergehäuse (1) seitlich geführte Schwenklager (15) jedes der justierbaren Schnappschalter (5) mittels einer Justierschraube (19) gegen die Federwirkung an dem Reglergehäuse (1) abgestützt ist.

4. Regler nach Anspruch 2, dadurch gekennzeichnet, daß das Schwenklager (15) des Schnappschalters (6) mit der wahlfreien Einstellung des Schaltpunktes in einer Richtung federnd gegen das Reglergehäuse (1) abgestützt und in diesem seitlich geführt ist und die Vorrichtung (25, 27) zum Einstellen des Schaltpunktes ein Druckstück (25), ein zur translatorischen Kraftübertragung auf das Druckstück (25) dienendes Kupplungselement (26) sowie eine mittels eines Gewindes im Reglergehäuse gehaltene und im Drehwinkel begrenzte Einstellwelle (27) aufweist und daß das Schwenklager (15) von dem Druckstück (25) gegen die Federkraft abgestützt ist.

5. Regler nach Anspruch 4, dadurch gekennzeichnet, daß das Druckstück (25) in Gestalt eines Blockes ausgebildet ist, der in Führungsteilen des Reglergehäuses (1) längsverschiebbar geführt ist.

6. Regler nach Anspruch 4 oder 5, dadurch gekennzeichnet, daß das Druckstück (25) aus einem elektrisch nicht leitenden Material besteht.

7. Regler nach Anspruch 2, dadurch gekennzeichnet, daß das Schwenklager (15) die Form eines Winkelprofils aufweist, dessen einer Schenkel gegen eine Feder (18) abgestützt und dessen anderer in dem Reglergehäuse (1) seitlich geführter Schenkel mit einem randoffenen Schlitz (17) versehen ist und daß der geschlitzte Schenkel eine parallel zum Winkelfalz verlaufende Kerbe trägt, in der Schneiden (14) der an dem lagerseitigen Ende T-förmig ausgebildeten und durch den Schlitz (17) hindurchreichenden Schaltwippe (13) aufliegen.

8. Regler nach Anspruch 1, dadurch gekennzeichnet, daß vorbestimmte Kontakte (7, 8, 9) der einzelnen Schnappschalter (5, 6) innerhalb oder außerhalb des Reglergehäuses (1) elektrisch leitend miteinander verbunden sind.

## Claims

1. A thermostatic coarse/fine controller, in particular for washing machines, with a housing (1) and a capillary feeler-controlled cantilever heat expansion element (23) with an associated adjustment device (24), by means of which element (23) several snap switches (5, 6) which are independently adjustable to a switching point can be triggered via a common actuating element (21), characterized in that one of snap switches (5, 6) which can be operated by the common actuating element (21) after installation of the controller in an electric apparatus is provided with an externally operated device (25, 26, 27) for the random and interaction-free fine adjustment of the switching point within a defined range.

2. A controller in accordance with claim 1, characterized in that each of said snap switches (5, 6) is provided with a switching rocker (13) pivoted at one end, whose swivel bearings (15) can be displaced in the direction of the actuating stroke of the heat expansion element (23) and in the operating direction of the snap switch (5, 6) and locked in their respective positions.

3. A controller in accordance with claim 2, characterized in that the swivel bearing (15) of each adjustable snap switch (5) which is supported in one direction against the housing (1) by a spring and laterally guided in the housing (1) is supported by an adjusting screw (19) on the housing (1) against the spring action.

4. A controller in accordance with claims 2, characterized in that the swivel bearing (15) of the snap switch (6) with the random adjustment of the switching point is supported in one direction by a spring against the housing (1) and laterally guided in said housing and in that the device (25, 26, 27) for the adjustment of the switching point comprises a thrust piece (25), a coupling element (26) for the linear power transmission to the thrust piece (25) as well as an adjusting shaft (27) which is secured in the housing by a thread and whose angle of rotation is limited and in that the swivel bearing (15) is supported against the spring force by the thrust piece (25).

5. A controller in accordance with claim 4, characterized in that the thrust piece (25) is designed as a block which is guided in the longitudinal direction in guide parts of the housing (1).

6. A controller in accordance with claim 4 or 5, characterized in that the thrust piece (25) consists of an electrically non-conductive material.

7. A controller in accordance with claims 2, characterized in that the swivel bearing (15) has the shape of an angle section whose one leg is supported against a spring (18) and whose other leg is laterally guided in the housing (1) and provided with an open slot (17) and in that the slotted leg is provided with a notch parallel to the longitudinal angle section axis, which notch supports edges (14) of the switching rocker (13) which protrudes through the slot (17) and which is T-shaped at its bearing end.

8. A controller in accordance with claims 1, characterized in that specified contacts (7, 8, 9) of the individual snap switches (5, 6) are connected electrically conductive to each other inside or outside of the housing (1).

## Revendications

1. Régulateur thermostatique à réglage grossier-fin, notamment pour machines à laver, qui comporte un carter (1) de régulateur et un élément de dilatation thermique (23) auquel est associé un dispositif de réglage (24), qui est commandé par une sonde capillaire, est supporté d'un seul côté et (23) peut actionner, à l'aide d'un orange de commande commun (21), plusieurs interrupteurs à déclic (5, 6) ajustables indépendamment les uns des autres sur un point de commutation, caractérisé en ce qu'un des interrupteurs à déclic (5, 6), commutables par l'orange de commande commun (21), est équipé d'un dispositif (25, 26, 27), pouvant être actionné de l'extérieur après installation du régulateur dans un appareil électrique, pour le réglage fin, librement choisi à volonté et sans réaction, du point de commutation à l'intérieur d'une plage préétablie.

2. Régulateur selon la revendication 1, caractérisé en ce que chacun des interrupteurs à déclic (5, 6) présente une bascule de commutation (13) montée à une extrémité de façon à pouvoir pivoter, et dont le support de pivotement (15) peut être déplacé dans le sens de la course de réglage de l'élément de dilatation thermique (23) et dans le sens de manoeuvre de l'interrupteur à déclic (5, 6) et être bloqué dans sa position.

3. Régulateur selon la revendication 2, caractérisé en ce que le support de pivotement (15) de chacun des interrupteurs à déclic ajustables (5), lequel support s'appuie de façon élastique dans un sens sur le carter (1) du régulateur et est latéralement guidé dans ledit carter (1) du régulateur, s'appuie à l'aide d'une vis d'ajustement (19) contre l'action d'un ressort sur le carter (1) du régulateur.

4. Régulateur selon la revendication 2, caractérisé en ce que le support de pivotement (15) de l'interrupteur à déclic (6) à réglage libre, choisi à volonté, du point de commutation, s'appuie de façon élastique dans un sens sur le carter (1) du régulateur et est latéralement guidé dans ledit carter (1) et que le dispositif (25, 27) destiné au réglage du point de commutation présente un orange de pression (25), un élément d'accouplement (26) pour la transmission des forces par translation à l'orange de pression (25), ainsi qu'un arbre de réglage (27), maintenu à l'aide d'un filetage dans le carter du régulateur et dont l'angle de rotation est limité, et que le support de pivotement (15) est soutenu, contre l'action d'un ressort, par l'orange de pression (25).

5. Régulateur selon la revendication 4, caractérisé en ce que l'orange de pression (25) est réalisé en forme de bloc, qui est guidé en translation longitudinale dans des éléments de guidage du carter (1) du régulateur.

6. Régulateur selon la revendication 4 ou 5, caractérisé en ce que l'organe de pression (25) est en un matériau non conducteur de l'électricité.

7. Régulateur selon la revendication 2, caractérisé en ce que le support de pivotement (15) est réalisé sous la forme d'une cornière, dont une branche s'appuie sur un ressort (18) et dont l'autre branche, qui est guidée latéralement dans le carter (1) du régulateur, présente une fente (17) ouverte sur un bord, et que la branche fendue porte une entaille parallèle au pli de la cornière et dans laquelle reposent des lames (14) de la bascule de commutation (13), laquelle est réalisée en forme de T à l'extrémité côté support et traverse ladite fente (17).

8. Régulateur selon la revendication 1, caractérisé en ce que des contacts (7, 8, 9) prédéterminés des différents interrupteurs à déclic (5, 6) sont connectés électriquement entre eux, à l'intérieur ou à l'extérieur du carter (1) du régulateur.

Fig. 1

Fig. 2

609 800 0

Fig.3

Fig. 4

609 800 0